# EUROPEAN PATENT SPECIFICATION

(11) **EP 1 872 033 B1**
(45) Date of publication and mention of the grant of the patent: **13.02.2013**
(21) Application number: 06726471.3
(22) Date of filing: 23.03.2006
(51) Int. Cl.: F16J 15/10, B22D 41/50

(54) **SEAL WITH EXPANDABLE GRAPHITE AND METHOD OF MANUFACTURING**
DICHTUNG MIT EXPANDIERBAREM GRAPHIT UND HERSTELLUNGSVERFAHREN
JOINT CONTENANT DU GRAPHITE EXPANSIBLE ET METHODE DE FABRICATION

(30) Priority: 20.04.2005 GB 0507940
(43) Date of publication of application: 02.01.2008
(73) Proprietor: Refractory Intellectual Property GmbH & Co. KG, 1100 Wien (AT)
(72) Inventor: ROGERS, Norman Edward, Woodville, Derbyshire DE11 7BZ (GB)
(74) Representative: Bryer, Pamela Ruth
(86) International application number: PCT/GB2006/001047
(87) International publication number: WO 2006/111696

(56) References cited:
- WO-A-02/083344
- US-A- 4 400 433
- US-A- 4 945 015
- US-A- 6 153 668

## Description

This invention relates to a seal and its method of manufacturing, particularly for use with a ladle shroud in the casting of molten metals from a ladle.

A problem has been found to exist during ladle changes when the seal used with the ladle shroud is based on expandable graphite as for instance disclosed in document WO 2/083344. Typically interstitial water present in expandable graphite starts to produce sufficient vapour pressure to initiate graphitic expansion at approximately 200° C. If exposed to temperatures in excess of say 500° C to 700° C over a short period of time, the expansion becomes so rapid that much graphite can become detached and lost and as a consequence the seal may become mechanically disrupted if it is unconstrained by two surfaces.

During start-up of the casting process, the seal is sandwiched at the point of abutment between an inner surface of a flange of the ladle shroud and a surface of a ladle nozzle. In this situation, as the seal heats up and the graphite tries to expand, flakes of graphite cannot do so and consequently they entwine around each other as they intumesce, and form a very effective gas seal. During ladle changes, however, a very different situation exists. At a ladle change, a fresh seal is placed into a hot ladle shroud and, in the worst case, up to three or four minutes may elapse before the shroud is attached to the ladle and the seal is constrained between two surfaces.

During the period whilst the fresh seal is unconstrained, it is heated by hot gases rising through the hot (approximately 1200° to 1400° C) ladle shroud, and as a result the seal starts to intumesce, and graphite material detaches and is lost by uncontrolled expansion of the seal. The longer the delay is attaching the shroud to the ladle, the poorer will be the performance of the seal due to the loss of the seal material which expands and breaks away as described. This deterioration of the seal results in more ingress at the abutment point and therefore more nitrogen pick-up.

An object of the invention is to provide a seal which can be used to obviate or reduce the above problem.

According to the invention there is provided a seal and its method of manufacturing comprising an intumescent composition containing pre-formed expandable graphite from which some, but not all, of the interstitial water present therein has been removed prior to formation of the seal.

Preferably the interstitial water has been removed by heating known expandable graphite to a temperature at which a required percentage of interstitial water is driven off. For many known types of expandable graphite, preferably approximately 40% to 60% of the interstitial water is removed. Desirably this is achieved by heating the expandable graphite to between approximately 230°C to 280°C for, in one embodiment, approximately 30 minutes.

Thus, in one embodiment of the present invention a selected type of known, untreated, expandable graphite is first heated to drive off a certain percentage of the interstitial water which it contains. To drive off between 40% to 60% of the interstitial water, the expandable graphite is thus firstly heated to, for example, between 230°C to 280°C, and in one embodiment the graphite is maintained at this temperature for approximately 30 minutes.

Once the required amount of interstitial water has been driven off, the pre-formed expandable graphite is then used to produce the intumescent composition, which is then formed/shaped into the required seal, for example for a ladle shroud used in the casting of molten metals.

It has been found by experiments and trials that the pre-heating of the expandable graphite present in the intumescent composition results in the seal undergoing a more controlled expansion, in use, during ladle changeover, whilst still acting as a gas tight seal. Accordingly as a consequence ladle changeover times can be extended, if necessary, without a concomitant loss of quality in the metal cast, i.e. steel.

## Claims

1. A seal comprising an intumescent composition, **characterised in** containing pre-formed expandable graphite from which some, but not all, of the interstitial water present therein has been removed prior to formation of the seal.

2. A seal as claimed in claim 1, wherein 40% to 60% of the interstitial water has been removed prior to formation of the seal.

3. A seal as claimed in either one of the preceding claims, adapted for a ladle shroud used in the casting of molten metals.

4. A method for manufacturing a seal according to claim 1 the method comprising the steps of:
removing said interstitial water by heating the expandable graphite to a temperature at which a required percentage of the interstitial water is driven off;
using the expandable graphite, after the required amount of interstitial water has been removed therefrom, to produce the intumescent composition; and
forming said intumescent composition into said seal.

5. The method of claim 4, wherein 40 to 60% of the interstitial water is driven off.

6. The method of claim 4 or claim 5, wherein the interstitial water is driven off by heating the expandable graphite to between 230°C and 280°C.

7. The method of claim 6, wherein the heating maintains the expandable graphite at between 230°C and 280°C for 30 minutes.

## Patentansprüche

1. Dichtung, die eine aufblähende Zusammensetzung aufweist, **dadurch gekennzeichnet, dass** sie einen vorgeformten expandierbaren Graphit enthält, aus dem etwas, aber nicht alles, vom darin vorhandenen Porenwasser vor der Ausbildung der Dichtung entfernt wurde.

2. Dichtung nach Anspruch 1, bei der 40 % bis 60 % des Porenwassers vor der Ausbildung der Dichtung entfernt wurden.

3. Dichtung nach einem der vorhergehenden Ansprüche, ausgebildet für einen Gießpfannenschutzmantel, der beim Gießen von geschmolzenen Metallen eingesetzt wird.

4. Verfahren zur Herstellung einer Dichtung nach Anspruch 1, wobei das Verfahren die folgenden Schritte aufweist:
Entfernen des Porenwassers durch Erhitzen des expandierbaren Graphits auf eine Temperatur, bei der ein erforderlicher Prozentsatz des Porenwassers ausgetrieben wird;
Verwenden des expandierbaren Graphits, nachdem die erforderliche Menge des Porenwassers daraus entfernt wurde, um eine aufblähende Zusammensetzung herzustellen; und
Formen der aufblähenden Zusammensetzung zur Dichtung.

5. Verfahren nach Anspruch 4, bei der 40 % bis 60 % des Porenwassers ausgetrieben wird.

6. Verfahren nach Anspruch 4 oder Anspruch 5, bei dem das Porenwasser durch Erhitzen des expandierbaren Graphits auf zwischen 230 °C und 280 °C ausgetrieben wird.

7. Verfahren nach Anspruch 6, bei dem der Schritt des Erhitzens das expandierbare Graphit auf zwischen 230 °C und 280 °C über 30 Minuten lang hält.

## Revendications

1. Joint, comprenant une composition intumescente, **caractérisé en ce qu'**elle contient du graphite expansible préformé, une partie, mais pas l'ensemble de l'eau interstitielle qui y est présente ayant été éliminée avant la formation du joint.

2. Joint selon la revendication 1, dans lequel 40% à 60% de l'eau interstitielle ont été éliminés avant la formation du joint.

3. Joint selon l'une des revendications précédentes, adapté pour un tube de puisard utilisé dans la coulée de métaux en fusion.

4. Procédé de fabrication d'un joint selon la revendication 1, le procédé comprenant les étapes ci-dessous :
élimination de ladite eau interstitielle en chauffant le graphite expansible à une température en présence de laquelle un pourcentage requis de l'eau interstitielle est éliminée ;
utilisation du graphite expansible, après l'élimination de la quantité requise d'eau interstitielle de celui-ci, pour former la composition intumescente ; et
formation de ladite composition intumescente dans ledit joint.

5. Procédé selon la revendication 4, dans lequel 40 à 60% de l'eau interstitielle sont éliminés.

6. Procédé selon les revendications 4 ou 5, dans lequel l'eau interstitielle est éliminée en chauffant le graphite expansible à une température comprise entre 230°C et 280°C.

7. Procédé selon la revendication 6, dans lequel le chauffage maintient le graphite expansible à une température comprise entre 230°C et 280°C pendant 30 minutes.
